(19) Europäisches Patentamt
European Patent Office
Office européen des brevets

(11) **EP 3 785 860 A1**

(12) **EUROPEAN PATENT APPLICATION**

(43) Date of publication:
**03.03.2021 Bulletin 2021/09**

(51) Int Cl.:
**B25C 1/04** (2006.01)      **F15D 1/02** (2006.01)

(21) Application number: **20188279.2**

(22) Date of filing: **29.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2019  TW 108127048**

(71) Applicant: **Basso Industry Corp.**
**40768 Taichung (TW)**

(72) Inventor: **LAI, Chun-Chi**
**40768 Taichung (TW)**

(74) Representative: **Brevalex**
**95, rue d'Amsterdam**
**75378 Paris Cedex 8 (FR)**

(54) **THROTTLE VALVE FOR A PNEUMATIC TOOL**

(57)      A throttle valve is adapted for use in a pneumatic tool (1). The throttle valve includes a valve body (2) and a filling unit (3). The valve body (2) has a passage (23) having an entrance section (231) that is formed in one end surface (21) of the valve body (2), and an exit section (232) that is formed in another end surface (22) of the valve body (2) and that is adapted to be connected directly to a flow path unit (12) of the pneumatic tool (1). The filling unit (3) is disposed in the passage (23) and cooperatively defines with the valve body (2) a gap (30), such that the gas flows into the gap (30) via the entrance section (231) of the passage (23), and flows out of the gap (30) via the exit section (232) of the passage (23).

FIG.4

**Description**

The disclosure relates to a throttle valve, more particularly to a throttle valve for a pneumatic tool.

A type of pneumatic tool, such as a nail gun, that can be switched between single-shot and continuous modes is disclosed in U.S. Patent No. 10335936 or U.S. Patent Publication No. 20140231485. In the continuous mode, a trigger of the pneumatic tool may be continuously depressed and a safety member (or force transmission element) subsequently depressed to enable continuous firing of the pneumatic tool. By virtue of a conventional throttle valve installed in the pneumatic tool, gas flow is controlled so as to enable firing of the pneumatic tool within a predetermined delay time, or to prevent firing of the pneumatic tool when the predetermined delay time has been exceeded.

The throttle valve must only let minute amounts of gas flow therethrough, and is formed with a very small through hole with a diameter of around 0.2 mm which requires high precision processing. Forming such a hole is very complicated and results in a relatively high manufacturing cost of the throttle valve.

Therefore, the object of the disclosure is to provide a throttle valve that can alleviate the drawback of the prior art.

According to the disclosure, a throttle valve is adapted for use in a pneumatic tool. The pneumatic tool includes a tool body, a flow path unit disposed in the tool body, and a valve assembly disposed inside the flow path unit and movable by pressure that is generated from gas which flows through the flow path unit. The throttle valve includes a valve body and a filling unit.

The valve body has a passage having an entrance section that is formed in one end surface of the valve body, and an exit section that is formed in another end surface of the valve body and that is adapted to be connected directly to the flow path unit.

The filling unit is disposed in the passage and cooperatively defines with the valve body a gap, such that the gas flows into the gap via the entrance section of the passage, and flows out of the gap via the exit section of the passage.

Other features and advantages of the disclosure will become apparent in the following detailed description of the embodiment with reference to the accompanying drawings, of which:

FIG. 1 is a sectional view of a pneumatic tool mounted with an embodiment of a throttle valve according to the disclosure;
FIG. 2 is a cutaway view illustrating a flow path unit, a conditioning valve assembly and a switch valve assembly of the pneumatic tool;
FIG. 3 is a partly exploded sectional view of the embodiment;
FIG. 4 is a sectional view of the embodiment installed in the pneumatic tool;
FIG. 5 is a sectional view taken along line V-V in FIG. 4;
FIG. 6 is a view similar to FIG. 5 but illustrating a transverse section of a filling member of the embodiment having a square shape;
FIG. 7 is a view similar to FIG. 5 but illustrating the transverse section of the filling member having a truncated circle shape;
FIG. 8 is a view similar to FIG. 4 but illustrating a passage of the embodiment having two passage portions;
FIG. 9 is a view similar to FIG. 8 but illustrating two filling members respectively disposed inside the passage portions;
FIG. 10 is a view similar to FIG. 1 but illustrating the passage of the embodiment being directly communicated with a main chamber of the pneumatic tools;
FIG. 11 is a view similar to FIG. 8 but illustrating the filling member mounted to a tool body of the pneumatic tool; and
FIG. 12 is a view similar to FIG. 9 but illustrating one of the filling members mounted to a valve body of the embodiment.

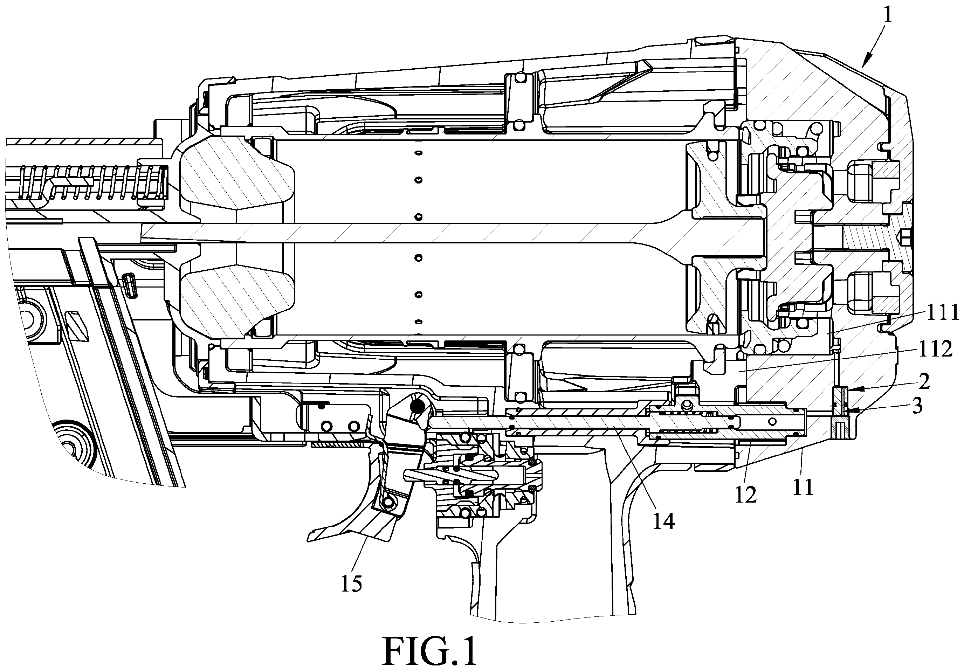

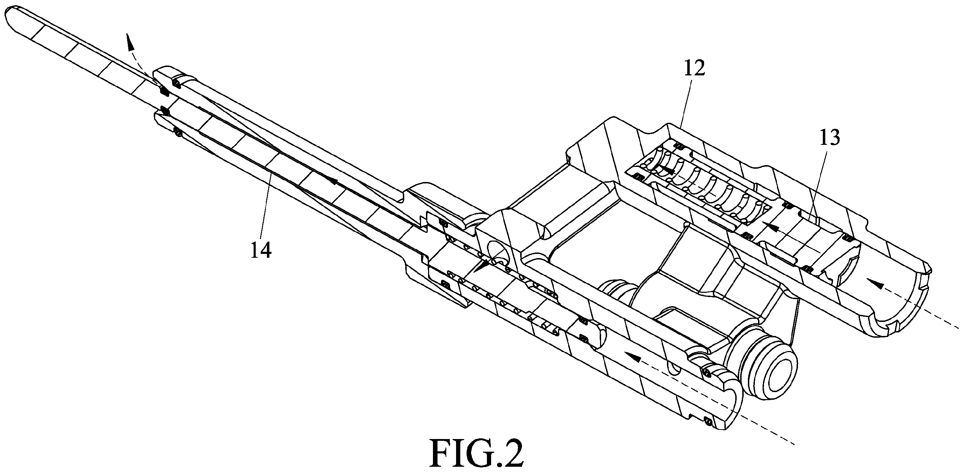

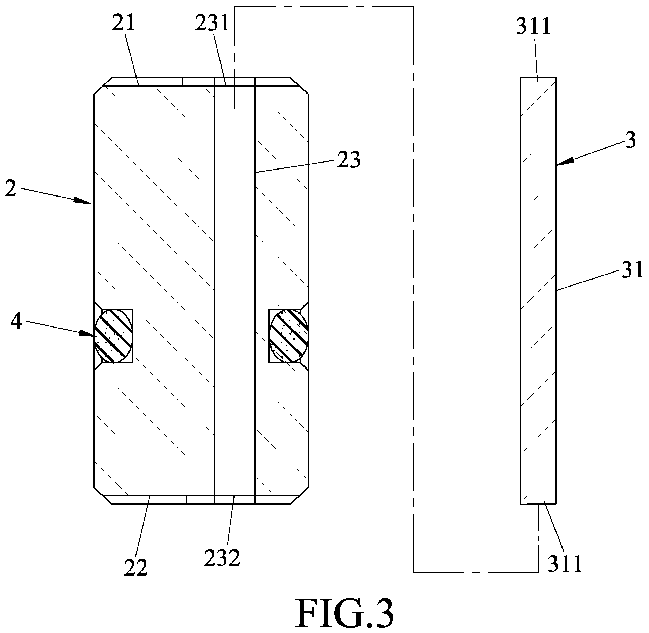

Referring to FIGS. 1, 2 and 3, an embodiment of a throttle valve is adapted for use in a pneumatic tool 1. In this embodiment, the pneumatic tool 1 is a pneumatic nail gun.

The pneumatic tool 1 includes a tool body 11, a flow path unit 12 disposed in the tool body 11 and directly communicated with the external environment, and conditioning and switch valve assemblies 13, 14 disposed movably in the flow path unit 12. The tool body 11 defines an operating chamber 111 and a main chamber 112 that are communicable via the flow path unit 12. The conditioning valve assembly 13 is movable by pressure generated from gas which flows through the flow path unit 12 to stop the main chamber 112 from communicating with the external environment and the operating chamber 111 through the flow path unit 12. The switch valve assembly 14 is driven by a trigger 15 to move to block direct communication between the flow path unit 12 and the external environment. When direct communication between the flow path unit 12 and the external environment is blocked, the conditioning valve assembly 13 is moved to a position where communication between the operating chamber 111 and the main chamber 112 is allowed, which equalizes the gas pressure between the operating chamber 111 and the main chamber 112, preventing the gas pressure in the main chamber 112 from being used to performing pneumatic action.

Referring to FIGS. 1, 3, 4, and 5, the throttle valve includes a valve body 2, a filling unit 3, and a sealing ring 4.

In this embodiment, the valve body 2 has a passage 23 having an entrance section 231 that is formed in one end surface 21 of the valve body 2, and an exit section 232 that is formed in another end surface 22 of the valve body 2 and that is adapted to be connected directly to the flow path unit 12. The passage 23 has a transverse section being circular.

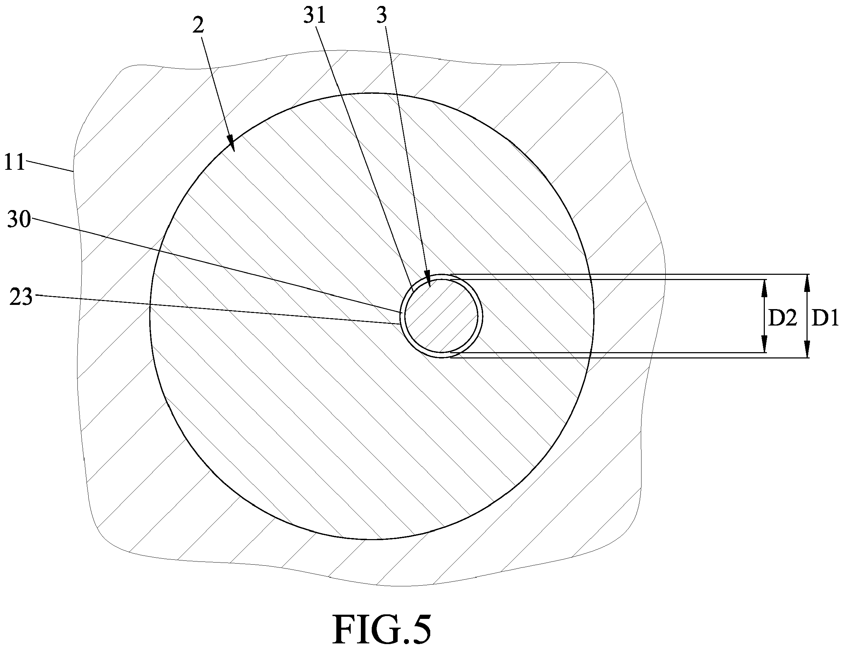

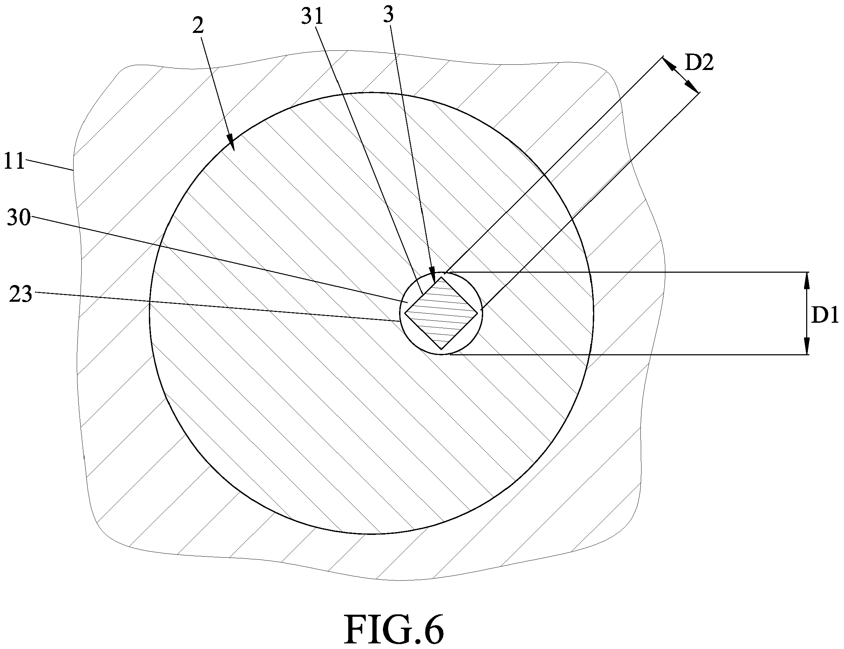

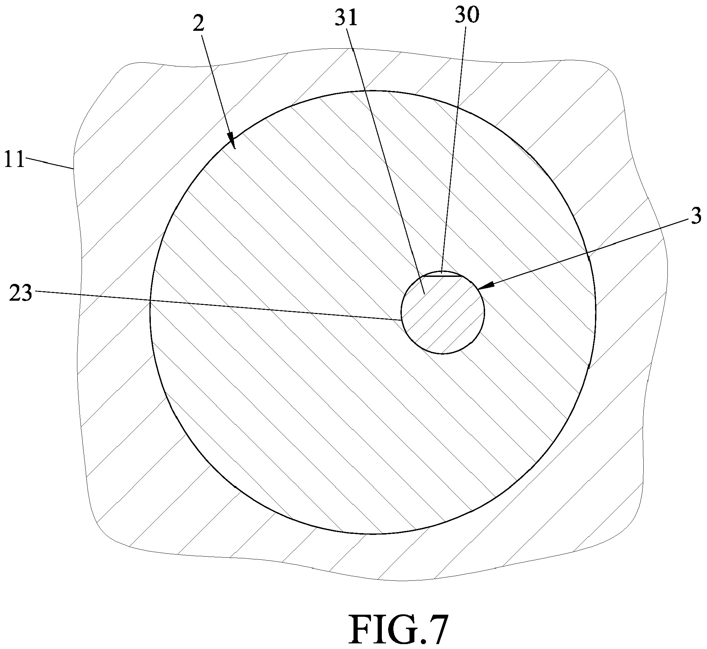

In this embodiment, the filling unit 3 includes a filling member 31 extending through the passage 23. The filling member 31 cooperatively defines with the valve body 2 a gap 30 such that the gas flows into the gap 30 via the entrance section 231 of the passage 23, and flows out of the gap 30 via the exit section 232 of the passage 23. In this embodiment, the filling member has two mounted ends 311 adapted to be mounted to the tool body 11. The filling member 31 has a transverse section having a shape of one of a circle (FIG. 5), a polygon (FIG. 6), and a truncated circle (FIG. 7) such that the gap 30 has an equivalent diameter (d).

The sealing ring 4 is sleeved on the valve body 2 and is adapted to be disposed between an outer surface of the valve body 2 and the tool body 11 to stop passage of gas therebetween.

In this embodiment, the transverse section of the filling member 31 is a circle having a diameter (D2) smaller than a diameter (D1) of the transverse section of the passage 23. Specifically, by forming the passage 23 having the diameter (D1) as listed in Table 1 and the filling member 31 having the corresponding diameter (D2) in Table 1, the gap 30 may have the equivalent diameter (d) which ranges from 0.11 mm to 0.49 mm.

Table 1:

| Diameter (D1) | Diameter (D2) | Equivalent Diameter (d) |
|---|---|---|
| 0.32 mm | 0.30 mm | 0.11 mm |
| 0.52 mm | 0.50 mm | 0.14 mm |
| 1.02 mm | 1.00 mm | 0.20 mm |
| 1.52 mm | 1.50 mm | 0.25 mm |
| 2.02 mm | 2.00 mm | 0.28 mm |
| 6.02 mm | 6.00 mm | 0.49 mm |

In the following description, the calculation for obtaining the equivalent diameter (d) is explained.

An area ($A_0$) for a transverse section of the gap 30 may be obtained by subtracting an area (A2) for the transverse section of the filling member 31 from an area (A1) for that of the passage 23.

For example, if the diameter (D1) is 0.52 mm and the diameter (D2) is 0.5 mm, then the area ($A_0$) is:

$$A_0 = A1 - A2 = \left(\frac{D1}{2}\right)^2 \pi - \left(\frac{D2}{2}\right)^2 \pi = \left(\frac{0.52}{2}\right)^2 \pi - \left(\frac{0.5}{2}\right)^2 \pi$$

$$= (0.0676 - 0.0625)\pi = 0.0051\pi \ \text{mm}^2$$

The equivalent diameter (d) of the gap 30 is defined as the diameter of a circle that has the same area as the transverse section of the gap 30, and hence may be obtained from the following equation:

$$A_0 = \left(\frac{d}{2}\right)^2 \pi$$

The value of the area ($A_0$) previously calculated is substituted in to obtain the equivalent diameter (d):

$$d = 2\sqrt{\frac{A_0}{\pi}} = 2\sqrt{0.0051} \approx 0.14 \ \text{mm}$$

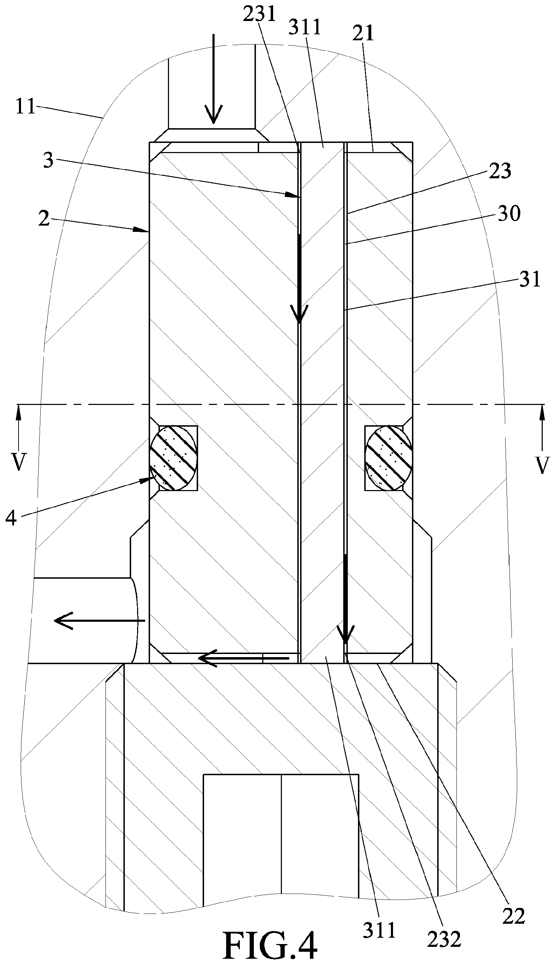

During continuous firing, gas moves along the arrow shown in FIG. 4 into the gap 30 through the entrance section 231 of the passage 23 and into the flow path unit 12 through the exit section 232, and drives the conditioning valve assembly 13 to move such that gas flow is guided to enable firing within a predetermined delay time, or to stop firing when the predetermined delay time has been exceeded.

Further details regarding the operation of the pneumatic tool 1 may be derived by those skilled in the art from the above description and the disclosure of U.S. Patent No. 10335936, and is thus omitted in this disclosure for the same of brevity.

Referring to FIG. 6, in a variation of the embodiment, the transverse section of the filling member 31 has a square shape. Table 2 shows three pairs of values for the diameter (D1) of transverse section of the passage 23 and the width (D2) of the transverse section of the filling member 31, and the corresponding equivalent diameter (d) of the gap 30.

Table 2:

| Diameter (D1) | Width (D2) | Equivalent Diameter (d) |
|---|---|---|
| 0.32 mm | 0.212 mm | 0.21 mm |
| 0.52 mm | 0.354 mm | 0.33 mm |
| 1.02 mm | 0.707 mm | 0.64 mm |

According to the abovementioned Tables 1 and 2, the equivalent diameter (d) of the gap 30 in this embodiment may range from 0.11 mm to 0.64 mm. In practice, the equivalent diameter (d) of the gap 30 generally ranges between 0.14 mm and 0.25 mm.

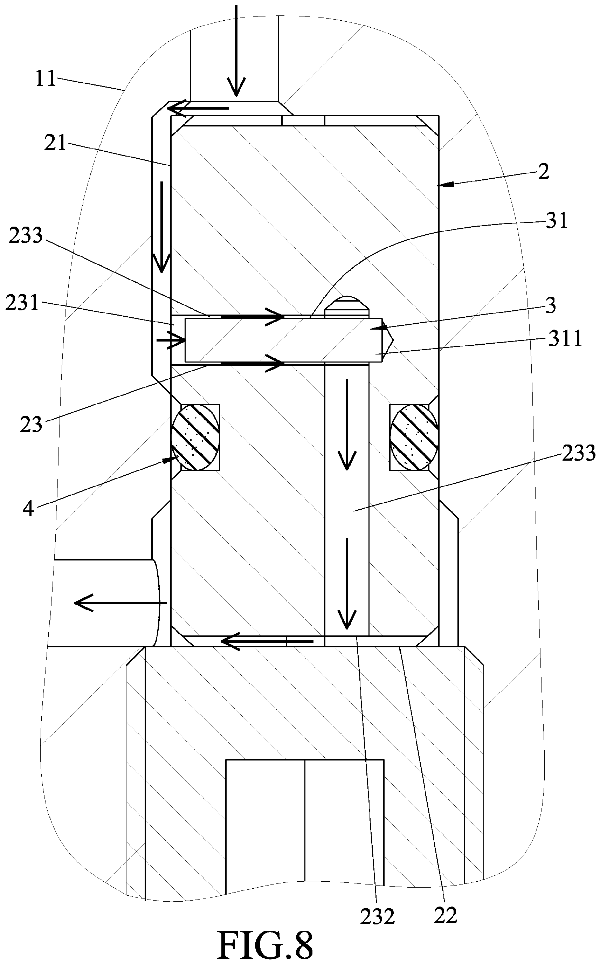

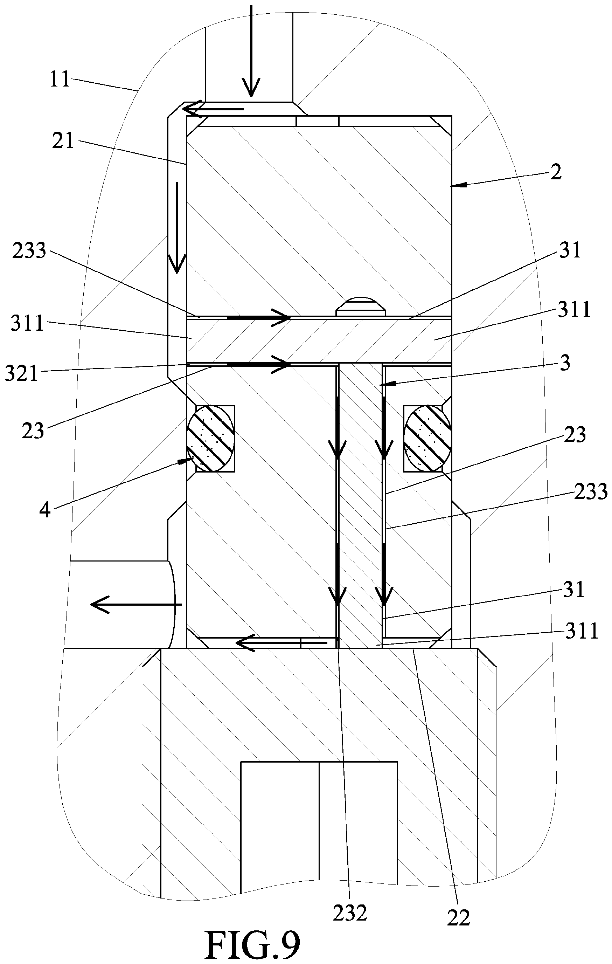

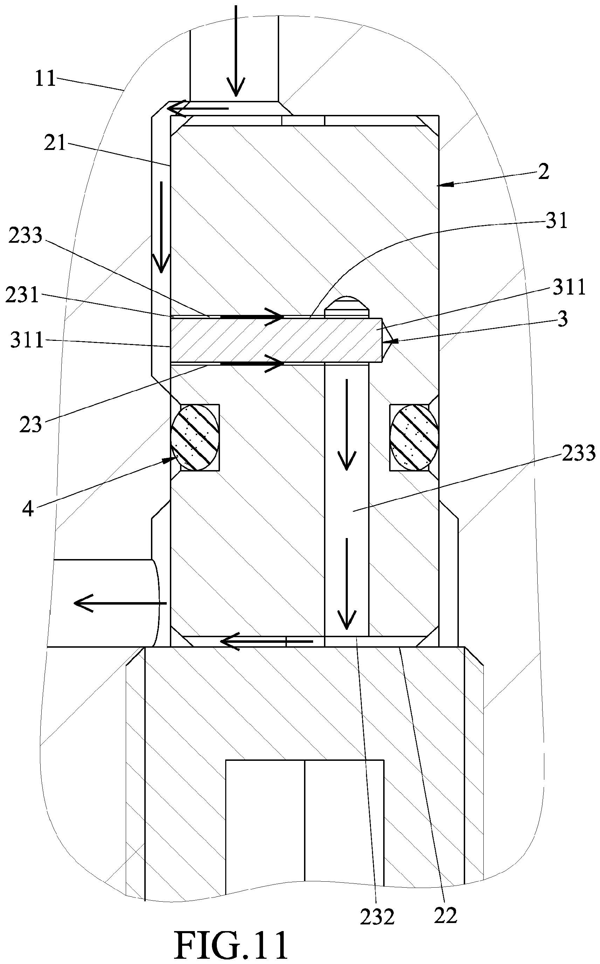

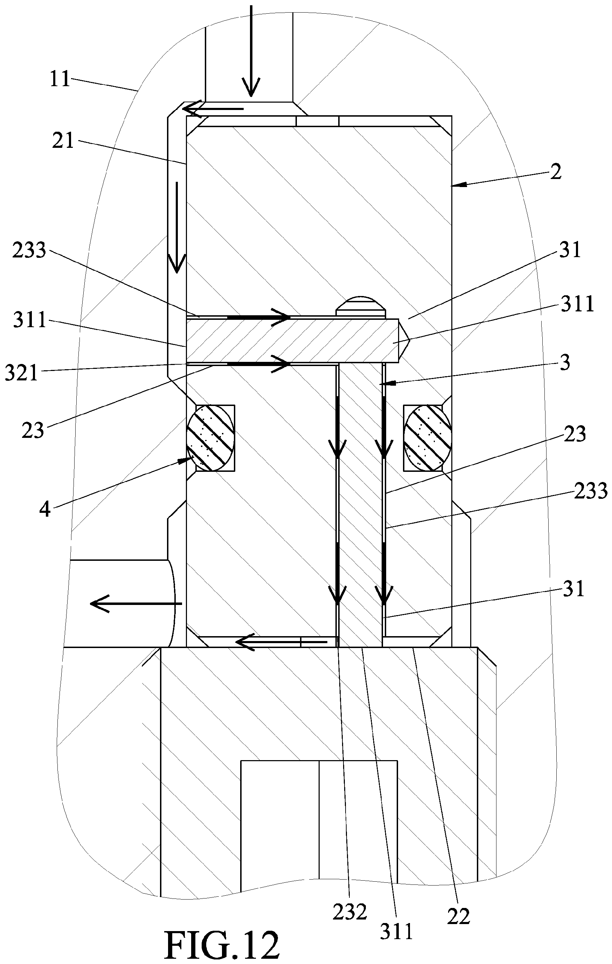

Referring to FIGS. 8, 9, 11, and 12, in another variation of the embodiment, the passage 23 may be configured to have two passage portions 233 extending transverse to each other, each of the passage portions 233 having an end that serves as a respective one of the entrance section 231 and the exit section 232 of the passage 23. The filling unit 3 may include one filling member 31 (FIG. 8 and 11) disposed in one of the passage portions 233, or two filling members 31 (FIG. 9 and 12) respectively disposed in the passage portions 233. The gap 30 can similarly be defined between each of the filling members 31 and the corresponding passage portion 233. In this variation, each of the mounted ends 311 of one of the mounting members 31 may be adapted to be mounted to the tool body 11, to the valve body 2, or to the other filling member 31. The passage portions 233 and the filling member(s) 31 may likewise be made to the dimensions specified in Table 1 to define the gap 30 having the equivalent diameter (d) which ranges from 0.11 mm to 0.49 mm.

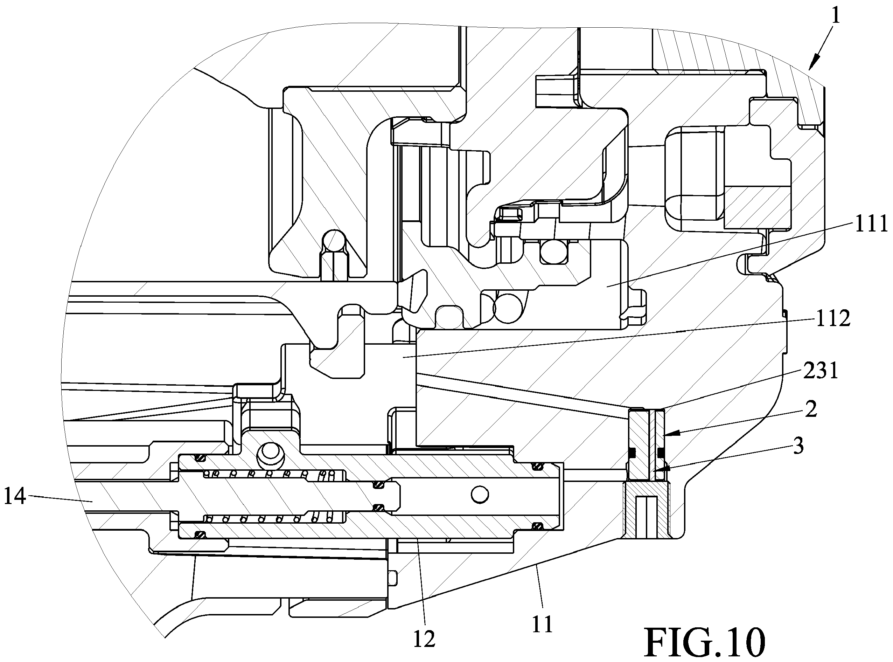

In yet another variation of the embodiment, as shown in FIG. 10, the entrance section 231 of the passage 23 is not limited to the configuration shown in FIG. 1, where it is directly communicated with the operating chamber 111, and may be directly communicated with the main chamber 112 instead.

The benefits of the throttle valve of the disclosure are as follows:

　　1. By creating the gap 30 between the passage 23 and the filling unit 3, the gap 30 having the relatively small equivalent diameter (d) can be produced more precisely and with a simplified process of manufacturing.

　　2. To adjust the delay time of the pneumatic tool 1 by adjusting the gas flow through the throttle valve, only the filling unit 3 needs to be replaced to define the gap 30 with a different equivalent diameter (d).

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

**Claims**

1.　A throttle valve adapted for use in a pneumatic tool, the pneumatic tool (1) including a tool body (11), a flow path unit (12) that is disposed in the tool body (11), and a valve assembly (13) that is disposed inside the flow path unit (12), and that is movable by pressure generated from gas which flows through the flow path unit (12), said throttle valve **characterized by**:

a valve body (2) having a passage (23) that has an entrance section (231) formed in one end surface (21) of said valve body (2), and an exit section (232) formed in another end surface (22) of said valve body (2) and adapted to be connected directly to the flow path unit (12); and

a filling unit (3) disposed in said passage (23) and cooperatively defining with said valve body (2) a gap (30), such that the gas flows into said gap (30) via said entrance section (231) of said passage (23), and flows out of said gap (30) via said exit section (232) of said passage (23).

2. The throttle valve as claimed in claim 1, **characterized in that** said passage (23) further has two passage portions (233) extending transverse to each other, each of said passage portions (233) having an end that serves as a respective one of said entrance section (231) and said exit section (232) of said passage (23).

3. The throttle valve as claimed in claim 2, further **characterized in that** said filling unit (3) includes a filling member (31) disposed in one of said passage portions (233) and cooperating with said valve body (2) to define said gap (30).

4. The throttle valve as claimed in claim 3, further **characterized in that** said filling member (31) has a mounted end (311) mounted to said valve body (2).

5. The throttle valve as claimed in claim 3 or 4, further **characterized in that** said filling member (31) has at least one mounted end (311) adapted to be mounted to the tool body (11).

6. The throttle valve as claimed in any one of claims 3 to 5, further **characterized in that** each of said passage portions (233) has a transverse section being circular, and said filling member (31) has a transverse section having a shape of one of a circle, a polygon, and a truncated circle.

7. The throttle valve as claimed in claim 2, further **characterized in that** said filling unit (3) includes two filling members (31) respectively disposed in said passage portions (233) and cooperating with said valve body (2) to define said gap (30).

8. The throttle valve as claimed in claim 7, further **characterized in that** at least one of said filling members (31) has a mounted end (311) mounted to said valve body (2).

9. The throttle valve as claimed in claim 7 or 8, further **characterized in that** at least one of said filling members (31) has at least one mounted end (311) adapted to be mounted to the tool body (11).

10. The throttle valve as claimed in any one of claims 7 to 9, further **characterized in that** each of said passage portions (233) has a transverse section being circular, and each of said filling members (31) has a transverse section having a shape of one of a circle, a polygon, and a truncated circle.

11. The throttle valve as claimed in claim 1, **characterized in that** said filling unit (3) includes a filling member (31) extending through said passage (23).

12. The throttle valve as claimed in claim 11, further **characterized in that** said filling member (31) has at least one mounted end (311) adapted to be limited by the tool body (11).

13. The throttle valve as claimed in claim 11 or 12, further **characterized in that** said passage (23) has a transverse section being circular, and said filling member (31) has a transverse section having a shape of one of a circle, a polygon, and a truncated circle.

14. The throttle valve as claimed in any one of the previous claims, **characterized in that** said filling unit (3) has a diameter (D2) smaller than a diameter (D1) of said passage (23), said gap (30) having an equivalent diameter (d) that ranges between 0.11 mm and 0.64 mm.

15. The throttle valve as claimed in claim 14, further **characterized in that** said equivalent diameter (d) of said gap (30) ranges between 0.14 mm and 0.25 mm.

FIG.1

EP 3 785 860 A1

FIG.2

EP 3 785 860 A1

FIG.3

EP 3 785 860 A1

FIG.4

FIG.5

FIG.6

EP 3 785 860 A1

FIG.7

FIG.8

FIG.9

FIG.10

EP 3 785 860 A1

FIG.11

FIG.12

Europäisches
Patentamt

European
Patent Office

Office européen
des brevets

# EUROPEAN SEARCH REPORT

**Application Number**

EP 20 18 8279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/266327 A1 (WU I-TSUNG [TW]) 3 November 2011 (2011-11-03) * paragraph [0028] - paragraph [0030]; figures 1,2 * ----- | 1-15 | INV. B25C1/04 F15D1/02 |
| X | WO 03/107523 A1 (STANFORD RES INST INT [US]; HEIM JONATHON R [US] ET AL.) 24 December 2003 (2003-12-24) * figure 3D * ----- | 1 | |

**TECHNICAL FIELDS SEARCHED (IPC)**

B25C
B25H
F15D

The present search report has been drawn up for all claims

| Place of search | Date of completion of the search | Examiner |
|---|---|---|
| The Hague | 20 January 2021 | Delval, Stéphane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                                        
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 18 8279

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2021

| Patent document cited in search report | | Publication date | Patent family member(s) | | Publication date |
|---|---|---|---|---|---|
| US 2011266327 | A1 | 03-11-2011 | NONE | | |
| WO 03107523 | A1 | 24-12-2003 | AT | 470984 T | 15-06-2010 |
| | | | AU | 2003223231 A1 | 31-12-2003 |
| | | | DK | 1481467 T3 | 11-10-2010 |
| | | | DK | 2299585 T3 | 16-09-2013 |
| | | | EP | 1481467 A1 | 01-12-2004 |
| | | | EP | 2276163 A1 | 19-01-2011 |
| | | | EP | 2299585 A1 | 23-03-2011 |
| | | | JP | 4408415 B2 | 03-02-2010 |
| | | | JP | 4939577 B2 | 30-05-2012 |
| | | | JP | 2005527178 A | 08-09-2005 |
| | | | JP | 2010004736 A | 07-01-2010 |
| | | | WO | 03107523 A1 | 24-12-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10335936 B

- US 20140231485 A